# EUROPÄISCHE PATENTSCHRIFT

(11) **EP 2 098 352 B1**
(45) Veröffentlichungstag und Bekanntmachung des Hinweises auf die Patenterteilung: **26.01.2011**
(21) Anmeldenummer: 09003008.1
(22) Anmeldetag: 03.03.2009
(51) Int. Cl.: B29C 45/16, B29C 45/33

(54) **Spritzgiesswerkzeug**
Injection moulding tool
Outil de moulage par injection

(30) Priorität: 03.03.2008 AT 3392008
(43) Veröffentlichungstag der Anmeldung: 09.09.2009
(73) Patentinhaber: Haidlmair Holding GmbH, 4542 Nussbach (AT)
(72) Erfinder: Weiermeier, Gerhard, 4560 Kirchdorf an der Krems (AT)
(74) Vertreter: Secklehner, Günter

(56) Entgegenhaltungen:
- EP-A- 1 820 738
- DE-A1- 2 849 145
- DE-A1- 10 353 751
- DE-A1-102005 059 976
- THOMAS LICHTENWÖHRER ET AL.: KUNSTSTOFFE, Nr. 10/2007, Oktober 2007 (2007-10), Seiten 216-221, XP002535715

## Beschreibung

Die Erfindung betrifft ein Spritzgießwerkzeug wie es im Oberbegriff des Anspruches 1 beschrieben ist.

Aus der DE 10 2005 059 976 A1 ist eine Spritzgießform zur Herstellung eines Transportkastens aus Kunststoff, bestehend aus einem Formkern und diesem von fünf Seiten umschließenden, die Wände des Transportkastens und dessen Boden auf ihren Außenseiten formenden Wand- und Bodenformteilen bekannt. Für ein Entformen des Spritzlings diese vom Formkern weg verschiebbar und für den Spritzvorgang zu einem geschlossenen Formhohlraum zusammenschiebbar. Zwischen den Wandformteilen sind gesonderte, verschiebbare Eckformteile angeordnet, die die Ecken des Transportkastens formen und die in zwei Stellungen verschiebbar sind. Zwischen den Wandformteilen und den Eckformteilen sind feststehende Keile vorgesehen zwischen deren rechtwinkelig zur Wandoberfläche verlaufenden und in einem Winkel 45° verlaufenden Seitenflächen die Wandformteile und die Eckformteile zwischen der ersten Stellung und der zweiten Stellung verstellbar anliegen.

Aus der EP 1 820 738 A1 ist ein Spritzgießwerkzeug zur Herstellung eines Transportkastens umfassend zumindest zwei relativ zueinander verstellbare Formelemente bekannt, die in einer Vorspritzstellung einem Formhohlraum, für das Spritzgießen einer, einen Boden- und Seitenwände des Transportkastens ausbildenden Grundschale, begrenzen und zumindest ein Formelement zur Schaffung eines zusätzlichen Formhohlraums für das Anspritzen einer mit der Grundschale verbundenen Hüllschicht gegenüber der Vorspritzstellung verstellbar gelagert ist.

Ein weiteres spritzgie swerkzeug ist aus der DE-A-103 53 751 bekannt.

Aufgabe der Erfindung ist es, ein Spritzgießwerkzeug mit einem einen Kernformteil aufweisenden Werkzeugunterteil und mit den Kernformteil zumindest bereichsweise in einem variierbaren Abstand zur Ausbildung einer veränderbaren Kavität umschließenden Wand- und Eckformteilen zu schaffen bei dem eine Verstellung der Formenteile für eine bereichsweise Veränderung der Kavität und eine Öffnung des Spritzgießwerkzeuges für eine Entnahme des Spritzlings mit einer geringen Anzahl von Antriebskomponenten erreicht wird.

Diese Aufgabe der Erfindung wird durch die im Kennzeichenteil des Anspruches 1 wiedergegebenen Merkmale erreicht. Der überraschende Vorteile ist, dass dadurch eine Antriebskoppelung zwischen den dem Kernformteil für einen Spritzvorgang umschließenden Formteilen erreicht wird die eine synchrone Bewegung der Formteile in eine vom Kernformteil entfernte Position gewährleistet und eine zusätzliche Relativverstellung der Eckformteile zu den Wandformteilen erreicht wird.

Möglich ist dabei eine Ausführung nach Anspruch 2, wodurch die Relativbewegung zwischen dem Eckformteil und dem Kernformteil in zwei zueinander rechtwinkelig verlaufenden Stellrichtungen gewährleistet ist.

Vorteilhaft sind aber auch Ausbildungen nach den Ansprüchen 3 bis 6, wodurch eine exakte Positionierung des vom Stellkeil betätigten Eckformteils erreicht wird und exakte Endpositionen durch die Abstimmung eines Keilwinkels und dem Verstellweg des Stellkeils zwischen exakt definierten Endpositionen gewährleistet ist.

Die in den Ansprüchen 7 und 8 beschriebene vorteilhafte Ausbildung gewährleistet eine Querverbindung der Wandformteile und damit exakte Höhenpositionierung der Wandformteile im Eckbereich des Werkzeuges.

Die vorteilhafte Ausbildung wie im Anspruch 9 beschrieben gewährleistet eine exakte Führung der bei einem Verstellvorgang längs den geneigten Verstellebenen für eine Distanzierung der Wandformteile vom Kernformteil relativ zueinander bewegten Wandformteilen.

Durch die im Anspruch 10 beschriebene vorteilhafte Ausbildung wird eine sehr einfache Führungsanordnung für den Eckformteil am Mitnehmerelement erreicht.

Die im Anspruch 11 beschriebene vorteilhafte Ausbildung gewährleistet eine ausreichende Distanzierung der Eckformteile für den Entformvorgang.

Vorteilhaft sind weiters die in den Ansprüchen 12 bis 14 beschriebenen Ausbildungen, weil dadurch einerseits eine exakte Führung des Eckformteils zwischen den Wandformteilen an den Gehrungsflächen erreicht wird und durch die beschriebene Querschnittsausbildung des Eckformteils einerseits eine sehr dichte Anlage und andererseits ein exakter Endanschlag für die Verstellung des Eckformteils in Richtung des Kernformteils und damit eine exakte Spaltausbildung für die Kavität erreicht wird.

Durch die in den Ansprüchen 15 bis 17 beschriebenen vorteilhaften Ausbildungen erfolgt ein synchrones Verstellen der Wandformteile und der mit diesen antriebsverbundenen Eckformteilen mit der Öffnungsverstellung des Spritzgießwerkzeuges, wodurch eine Relativbewegung der Wandformteile und Eckformteile gegenüber dem Spritzling vermieden wird.

Die Ansprüche 18 bis 21 beschreiben weitere vorteilhafte Ausbildungen, wodurch eine hohe Dauerstandsfestigkeit der Führungen und Betätigungseinrichtungen erreicht wird.

Schließlich sind auch Ausbildungen gemäß den Ansprüchen 22 bis 25 vorteilhaft, da damit der Stellkeil gegen die Wirkung der durch den Druck in der Kavität beim Einspritzen der Kunststoffmasse auf den Eckformteil ausgeübten Kraft durch die beim Einspritzvorgang verriegelten Wandformteile abgestützt wird und damit eine Krafteinwirkung auf das Führungselement, dessen Befestigung und die Linearführungsanordnung wirkungsvoll vermieden wird. Dies gewährleistet geringe Abmessungen der Bauteile in den Eckbereichen und somit insgesamt kleinere sowie Gewicht und Kosten sparende Spritzgießwerkzeuge.

Zum besseren Verständnis der Erfindung wird diese anhand der in den Figuren gezeigten Ausführungsbeispiele näher erläutert.

Es zeigen:
- Fig. 1: den Eckbereich des erfindungsgemäßen Spritzgießwerkzeuges in Stellung des Eckformteil zum Spritzen der Grundschale, geschnitten gemäß den Linien I-I in Fig. 2;
- Fig. 2: den Eckbereich des Spritzgießwerkzeuges, geschnitten gemäß den Linien II-II in Fig. 1;
- Fig. 3: einen Eckbereich eines mit dem erfindungsgemäßen Spritzgießwerkzeug produ- zierten Transportkasten in perspektivischer Ansicht;
- Fig. 4: der Eckbereich des erfindungsgemäßen Spritzgießwerkzeuges in Stellung des Eckformteils zum Aufspritzen der Hüllschicht auf die Grundschale, geschnitten gemäß den Linien IV-IV in Fig. 5;
- Fig. 5: der Eckbereich geschnitten gemäß den Linien V-V in Fig. 4;
- Fig. 6: das erfindungsgemäße Spritzgießwerkzeug in geöffneter Position mit zurückge- zogener Stellung des Eckformteils, geschnitten gemäß den Linien VI-VI in Fig. 7;
- Fig. 7: den Eckbereich des geöffneten Spritzgießwerkzeuges, geschnitten gemäß den Li- nien VII-VII in Fig. 6;
- Fig. 8: einen Teilbereich des Formoberteils mit dein Wandformteil des erfindungsgemä- ßen Spritzgießwerkzeuges in geöffneter Position der Wandformteile, geschnitten gemäß den Linien VIII-VIII in Fig. 2.

Einführen sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

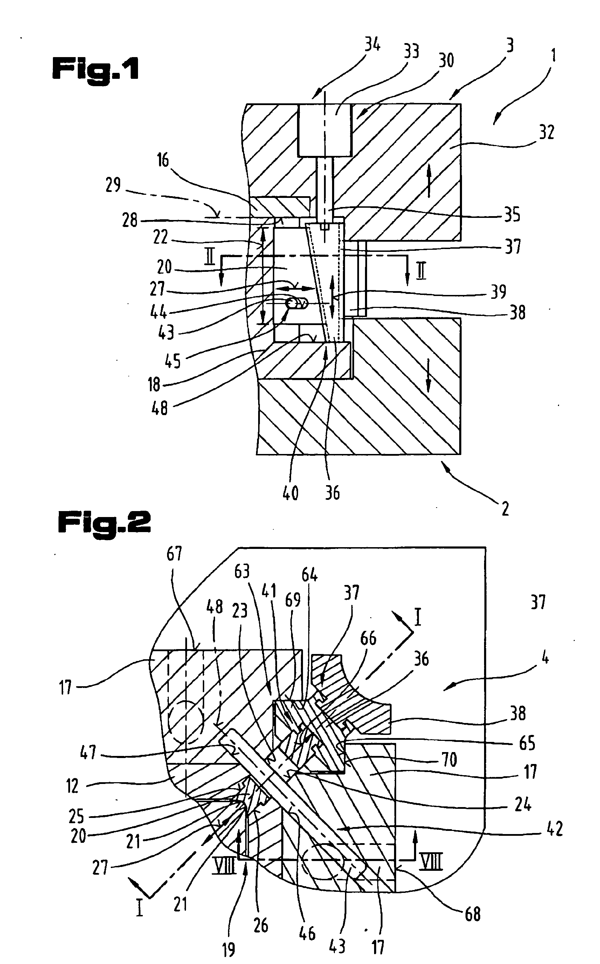

In den Fig. 1 und 2 ist ein Detail eines Spritzgießwerkzeuges 1, bestehend aus einem Formunterteil 2 und einem Formoberteil 3, die relativ zueinander verstellbar sind, in der Ausbildung einer Formecke 4 gezeigt.

Das Spritzgießwerkzeug 1 ist mit dem Formunterteil 2 und dem Formoberteil 3 in einer nicht weiter dargestellten Spritzgießmaschine gespannt, durch welche die Relativverstellung zum Schließen und Öffnen des Spritzgießwerkzeuges 1 für einen Spritzvorgang und einen Entnahmevorgang eines Spritzlings 5 erfolgt.

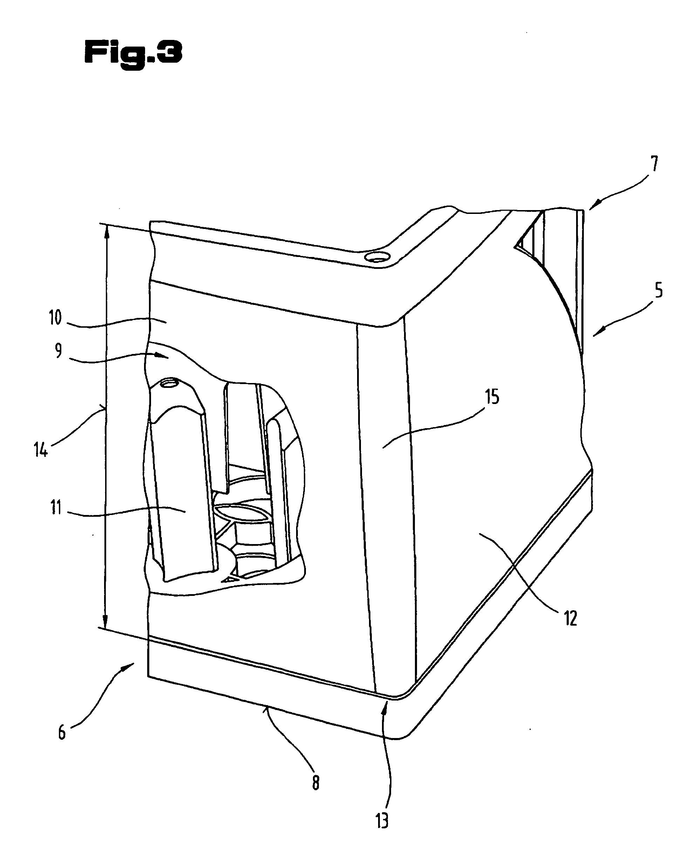

Der Spritzling 5 ist bspw. ein Transportkasten 6, insbesondere Flaschenkasten 7, wie er im Detail im Weiteren in vereinfachter Darstellung der Fig. 3 zu entnehmen ist. Dieser besteht aus einem Kastenboden 8 sowie vier mit dem Kastenboden 8 einen Innenraum 9 umgrenzenden Seitenwänden 10 und einem den Innenraum 9 unterteilenden Innengefache 11.

Der Kastenboden 8 bildet mit den Seitenwänden 10 und dem Innengefache 11 eine einstückige Grundschale die teilweise durch Ausbildung von Hohlräumen auch doppelwandig sein kann, insbesondere zur Vermeidung von Materialanhäufungen.

Die Abbildung zeigt einen im Wesentlichen recheckigen Kasten mit Kastenboden 8 und vier Seitenwänden 10, die zueinander rechtwinkelig ausgerichtet sind. Rechtwinkelig zum Kastenboden 8 verlaufende Kastenkanten 13 sind gerundet ausgebildet und ist in diesen Bereichen auf der Grundschale aus einem ersten Kunststoff eine sich um die Kastenkante 13 und einem Teilbereich einer Seitenwandhöhe 14 erstreckende Hüllschicht 15 aus einem zweiten Kunststoff aufgebracht.

Diese wird durch einen zweiten Spritzvorgang im Spritzgießwerkzeug 1 durch Veränderung einer Formkavität im Bereich der Formecke 4 erreicht wobei die Hüllschicht 15 auf die noch nicht gänzlich erkaltete Grundschale 12 aufgespritzt wird. Die Hüllschicht 15 besteht bspw. aus zum Kunststoffmaterial der Grundschale 12 unterschiedlichen Kunststoffmaterial mit anderen mechanischen Eigenschaften und/oder ein Designelement ist, z.B. sich farblich vom Material der Grundschale 12 unterscheidet.

Das Spritzgießwerkzeug 1 ist in den Fig. 1 und 2 in der für das Spritzgießen der Grundschale 12 geschlossenen Stellung gezeigt in der der Formoberteil 3 und der Formunterteil 2 zueinander verstellt sind und zwischen einem Bodenformteil 16 und Seitenwandteilen 17 des Formoberteils 3 und einem Kernformteil 18 des Formunterteils 2 eine Kavität 19 zum Einspritzen der Kunststoffmasse und damit zur Bildung des Kastenbodens 8 mit den Seitenwänden 10 entsprechend eine vorgesehenen Wanddicke bzw. Wandausbildung besteht.

Die Formecke 4 zwischen den benachbarten und einen Winkel von 90° zueinander einschließenden Wandformteilen 12 wird durch einen, in einem Gehrungswinkel von 45° angeordneten Eckformteil 20 gebildet, der mit einer dem Kernformteil 18 zugewandten, durch eine innen gerundete Nut ausgebildeten Formfläche 21 am Kernformteil 18, über eine Höhe 22 des Eckformteil 20, gegebenenfalls bereichsweise am Kernformteil 18 anliegt.

Dadurch verbleiben an der zu bildenden Kastenkante 13 der Grundschale 12 Wandunterbrechungen beim ersten Spritzvorgang und Einspritzen der Kunststoffmasse für die Grundschale 12, wodurch noch zusätzlich eine Verankerung mit der Hüllschicht 15 erreicht werden kann.

Der Eckformteil 20 umfasst mit der profilierten Formfläche 21 die Kantenkante 13 entsprechend einer vorgesehenen Abmessung der auf die Grundschale 12 im weiteren Spritzvorgang aufzubringenden Hüllschicht 15.

Der Eckformteil 20 ist zwischen gegenüberliegende Gehrungsflächen 23, 24 der Wandformteile 17 eingepasst, wobei die Gehrungsflächen 23, 24 an Seitenflächen 25, 26 des Eckformteils 20 im geschlossenen Zustand des Spritzgießwerkzeuges 1 dicht anliegen.

Der Eckformteil 20 ist zwischen den Gehrungsflächen 23, 24 der Wandformteile 17 in der Ebene des 45°-igen Gehrungswinkel in zwei Positionen verstellbar. Dazu ist im Formoberteil 3 ein, zu einer, durch eine Spannfläche 28 im Werkzeugoberteil 3 gebildeten Ebene 29 senkrechter Richtung wirkender Stellantrieb 30, angeordnet.

Der Stellantrieb 30 für den Eckformteil 20 wird insgesamt durch ein in einer Aufspannplatte 32 des Formoberteils 3 angeordnetes Stellmittel 33, z.B. Hydraulikzylinder 34, mit einer senkrecht zur Spannfläche 28 ausgerichteten Kolbenstange 35 und einem damit betätigbaren Stellkeil 36 gebildet.

Dieser ist in einer Linearführungsanordnung 37, eines an der Aufspannplatte 32 befestigten und in Richtung des Formunterteils 2 erstreckenden Führungselement 38, in zur Ebene 29 senkrechten Richtung - gemäß Doppelpfeil 39 - verstellbar.

Der Stellkeil 36 weist gegenüber der Linearführungsanordnung 37 eine in Stellrichtung - gemäß Doppelpfeil 39 - geneigt verlaufende Führungsanordnung 40 mit einer T- Nutführung 41 auf, in welcher der Eckformteil 20 mit einem gegengleich ausgebildeten Führungsfortsatz an einer der Formfläche 21 entgegen gesetzten Rückseite geführt ist. Damit wird bei einer Verstellung des Stellkeils 36, in einer zu der Ebene 29 senkrechten Richtung, eine lineare Verstellung des Eckformteils 20, in einer zur Ebene 29 parallelen Richtung - gemäß Doppepfeil 27 - bewirkt.

Dies ermöglicht den Eckformteil 20 in Abhängigkeit einer Relativstellung zwischen dem Eckformteil 20 und dem Stellkeil 36 die Formfläche 21 in einem variierbaren stufenlosen Abstand in Bezug auf den Kernformteil 18 zu positionieren. Damit wird eine veränderbare Kavität zwischen dem Kernformteil 18 und der diesem zugewandten Formfläche 21 des Eckformteils 20 erreicht, wie auch eine distanzierte Position wie sie für das Öffnen des Spritzgießwerkzeuges 1 und für das Entformen des Spritzlings 5 erforderlich ist.

Für eine Positionierung des Eckformteils 20 in Bezug auf die benachbarten Wandformteile 17, unabhängig von deren variierbaren Position in Bezug auf die Spannfläche 28 der Aufspannplatte 32, ist ein Mitnehmerelement 42, im gezeigten Ausführungsbeispiel ein Zylinderstift 43, den Eckformteil 20 in einem als Langloch 44 ausgebildeten Führungsmittel 45 querend, vorgesehen. Dieser ist in Bohrungen 46, 47 in den einander gegenüberliegenden Gehrungsflächen 23, 24 der Wandformteile 17 angeordnet und verläuft somit eine Längsmittelachse 48 des Zylinderstifts 43 senkrecht zur Verstellrichtung - gemäß Doppelpfeil 27 - des Eckformteils 20.

Der Zylinderstift 43 ist bspw. in einer der Bohrungen 46, 47 über einen Presssitz gehaltert und in der weiteren Bohrung 46, 47 über einen Schiebesitz aufgenommen. Das Langloch 44 erstreckt sich in Verstellrichtung - gemäß Doppelpfeil 27 - des Eckformteils 20, wodurch dessen Verstellung mittels des Stellkeils 36 in den gewünschten Abständen der Formfläche 21 zum Kernformteil 18 gewährleistet ist.

In der in der Fig. 1 gezeigten geschlossenen Stellung des Spritzgießwerkzeuges 1 ist der Stellkeil 36 gegen eine Anlagefläche 48 des Formunterteils 2 mit dem Stellmittel 30 gepresst, wobei in dieser Stellung der Eckformteil 20 mit der Formfläche 21 an den Kernformteil 18 angestellt ist. In dieser Stellung des Eckformteils 20 erfolgt das Einspritzen der Formmasse in die Kavität 19 zur Ausbildung der Grundschale 12 des Transportkastens 6.

Eine Gesamtlänge 49 des Stellkeils 36 in Richtung seiner Stellrichtung - gemäß Doppelpfeil 39 - ist kleiner als eine Innenhöhe 50 zwischen der Anlagefläche 48 im Formunterteil 2 und der Spannfläche 28 des Formoberteils 3.

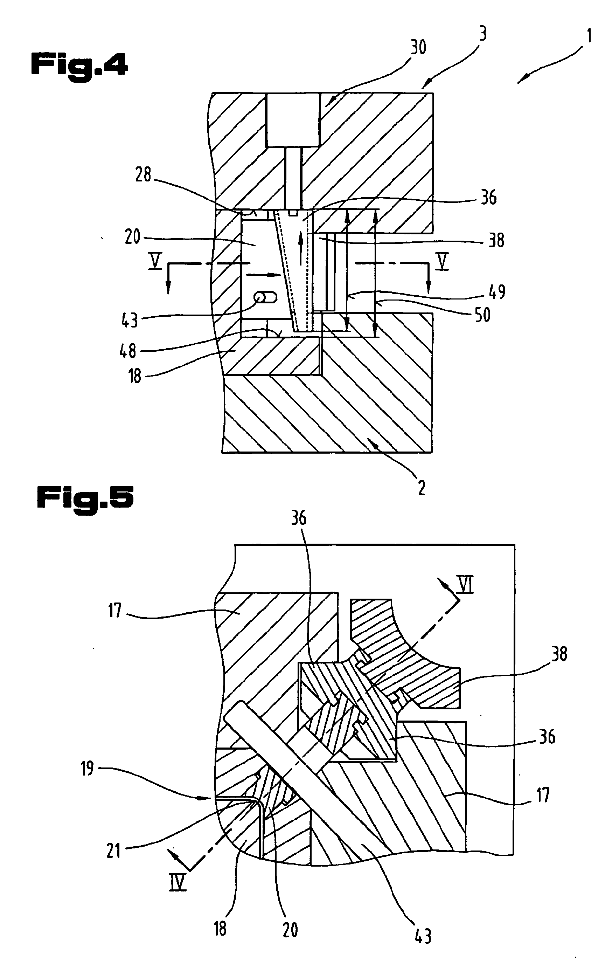

In der Fig. 5 ist die Stellung des Eckformteils 20 zum Anspritzen der Hüllschicht 14 auf die Grundschale 12 gezeigt. Dazu ist der Stellkeil 36 mittels des Stellmittels 30 in eine obere Anschlaglage verstellt, in der dieser gegen die Spannfläche 28 verstellt ist. Durch die Antriebsverbindung des Kernformteils 18 mit dem Stellkeil 36 in der Linearführungsanordnung 37 ist das Kernformelement 20 mit seiner Formfläche 21 zur Ausbildung eines vorgegebenen Abstandes gegenüber dem Kernformteil 18 verstellt. In dieser Position erfolgt nunmehr das Einspritzen der weiteren Kunststoffmasse in die frei gegebene Kavität im Kantenbereich des Transportkastens 6.

Die Positionen des Kernformteils 20 für eine erste Stellung bei der die Grundschale 12 gespritzt wird und einer zweiten Stellung bei der die Hüllschicht 15 gespritzt wird, wird durch eine exakte Abstimmung der Gesamtlänge 49 des Stellkeils 36 und der Innenhöhe 50 zwischen der Anlagefläche 48 im Formunterteil 2 und der Spannfläche 28 im Formoberteil sowie der maßlichen Abstimmung des Kernformteils 20 und des Stellkeils 36 und der Distanz zwischen dem Kernformteil bzw. der Formkante und dem Führungselement 38 für den Stellkeil 36 erreicht.

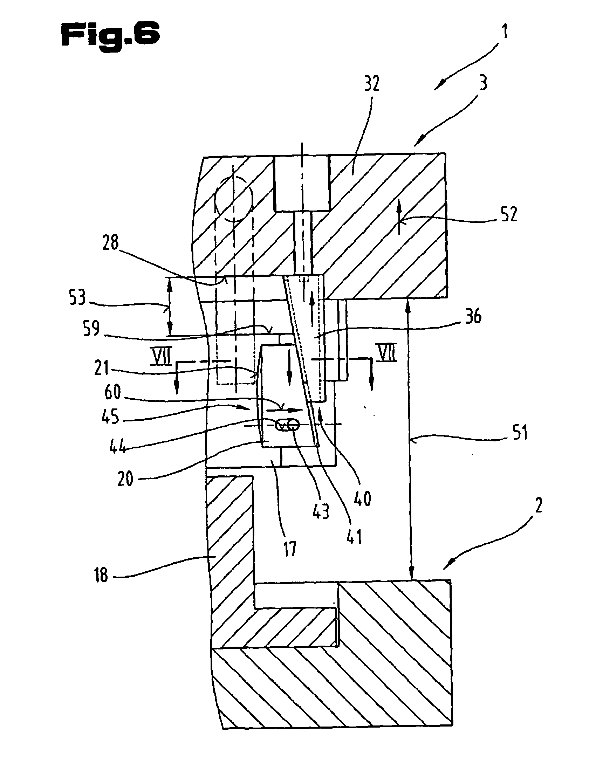

In den Fig. 6 bis 8 ist das Spritzgießwerkzeug 1 in teils geöffneter Stellung gezeigt, wobei zum Entformen des Spritzlings die Verstellbewegung noch nicht abgeschlossen ist, d. h. dass für die Entnahme des Spritzlings eine endgültige Distanz 51 zwischen dem Formunterteil 2 und dem Formoberteil 3 in der gezeigten Darstellung noch nicht erreicht ist.

Synchron mit einer von der nicht weiter dargestellten Spritzgießmaschine bewirkten Öffnungsbewegung - gemäß Pfeil 52 - z.B. des Formoberteils 3 werden die Seitenwandteile 17 über nicht weiter gezeigte und aus dem Stand der Technik bekannte Stellantriebe, z.B. Hydraulikzylinder, von der Anlage an der Spannfläche 28 der Aufspannplatte 32 um einen Abstand 53 verstellt. Dieser Verstellvorgang erfolgt längs schräg gestellter Führungssäulen 54 die in einer Bohrung 55 der Aufspannplatte 32 festsitzend angeordnet sind. Lagerbüchsen 56 in Bohrungen 57 der Seitenwandteile 17 gewährleisten eine exakte Führung der Seitenwandteile 17 für eine Verstellung in geneigten Ebenen entsprechend einem Winkel 58 der Schrägstellung der Führungssäulen 54 gegenüber der Spannfläche 28. Der Winkel 58 beträgt bevorzugt etwa 60°.

Gleichzeitig mit der Verstellung um den Abstand 53 zwischen der Spannfläche 28 und Stirnflächen 59 der Wandformteile 17 wird infolge der Verstellung in den geneigten Ebenen eine Distanzierung zwischen den Gehrungsflächen 23, 24 der Seitenwandteile 17 erreicht, d. h. die Seitenwandteile 17 werden dadurch zur Öffnung der Kavität vom Kernformteil 18 distanziert, wobei die Wandformteile 17 zueinander in der Formecke 4 noch zusätzlich durch den Zylinderstift 43 geführt sind.

Wie bereits vorhergehend beschrieben, bewirkt dieser Zylinderstift 43 in Verbindung mit der durch das Langloch 44 im Eckformteil 20 gebildeten Führungsmittel 45, durch die Relativbewegung gegenüber dem Stellkeil 36, der in seiner Endstellung auf Anlage an der Spannfläche 28 anliegt und in Verbindung mit der geneigten T-Nutfülhrung 41 zwischen dem Stellkeil 36 und dem Eckformteil 20 eine weitere Verstellung des Eckformteils 20, gemäß - Pfeil 60 - für eine weitere Distanzierung der Formfläche 21 des Eckformteils 20 vom Kernformteil 18.

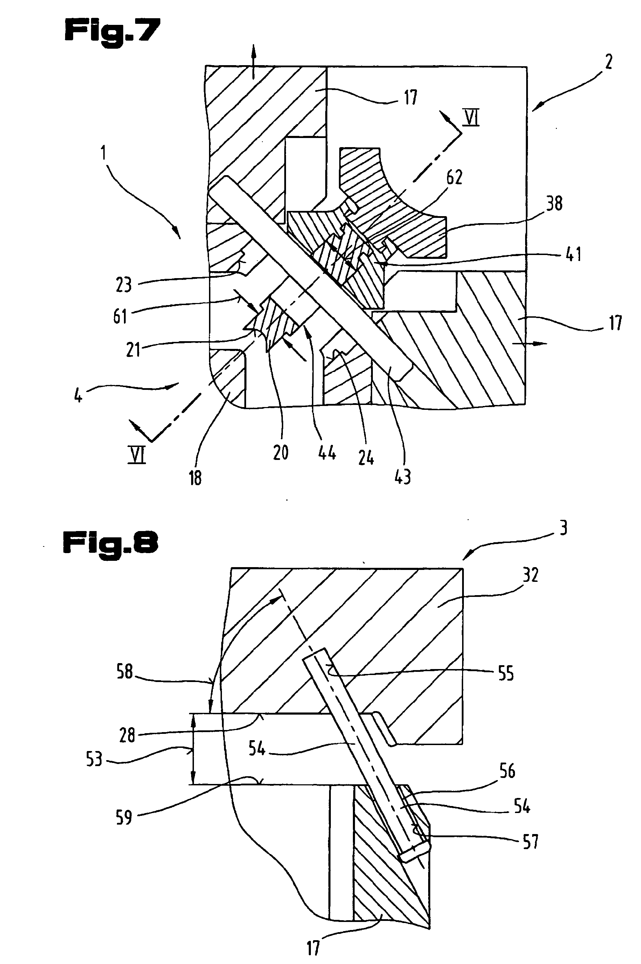

Der Fig. 7 ist weiter zu entnehmen, dass die Gehrungsflächen 23, 24 der Wandformteile 17 nach einer bevorzugten Ausbildung abgestuft sind. Der Eckformteil 20 weist einen T- förmigen Querschnitt auf und ist eine Dicke 61 im Bereich der Formfläche 21 kleiner als eine Dicke 62 im Bereich der T- Nutführung 41. Durch diese Abstufung der Dicken 61, 62 werden Anschlagflächen in einer zur Verstellrichtung des Eckformteils 20 senkrechten Ebene erreicht die einen Stellweg in Richtung des Kernformteils 18 begrenzen und damit für eine exakte Spaltausbildung bzw. Ausbildung der Kavität zwischen dem Kernformteil 18 und der Formfläche 21 des Eckformteils 20 wesentlich sind.

Wie den Fig. 1 und 2 weiter zu entnehmen ist, bilden die Wandformteile 17 im Bereich der Formecke 4 eine Stützanordnung 63 für den Stellkeil 36 mit dem an diesem verstellbar geführtem Eckformteil 20 aus. Diese Stützanordnung 63 wird durch dem Stellkeil 36 zugewandte Stützflächen 64, 65 an den Wandformteile 17 erreicht, die zu einer auf den Eckformteil 20 einwirkenden Kraft - gemäß Pfeil 66 - beim Einspritzen der Kunststoffmasse in die Kavität 19, jeweils gegengleich in einem Winkel von 45° zur Kraftrichtung der Kraft - gemäß Pfeil 66 - ausgerichtet sind und somit parallel Außenflächen 67, 68 der Wandformteile 17 ausgerichtet sind. Der Stellkeil 36 ist durch eine etwa Sechseck-Querschnittsausbildung der Ausrichtung der Stützflächen 64, 65 angepasst wodurch mit den Stützflächen 64, 65 zusammenwirkende Anlageflächen 69, 70 zur Kraftableitung in die Wandformteile 17 erreicht werden.

Diese Stützanordnung 63 ermöglicht geringe Abmessungen des Stellkeils 36 und des säulenartigen Führungselementes 38 an dem der Stellkeil 36 in der Linearführungsanordnung 37 verstellbar geführt ist und das stirnseitig an der Aufspannplatte 32 befestigt ist und in Richtung des Formunterteils 2 frei ausragt.

Die Ausführungsbeispiele zeigen mögliche Ausführungsvarianten des Spritzgießwerkzeuges 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des Spritzgießwerkzeuges dieses bzw. dessen Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1, 2; 3; 4, 5; 6, 7; 8 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Spritzgießwerkzeug
- 2: Formunterteil
- 3: Formoberteil
- 4: Formecke
- 5: Spritzling

- 6: Transportkasten
- 7: Flaschenkasten
- 8: Kastenboden
- 9: Innenraum
- 10: Seitewand

- 11: Innengefache
- 12: Grundschale
- 13: Kastenkante
- 14: Seitenwandhöhe
- 15: Hüllschicht

- 16: Bodenformteil
- 17: Wandformteil
- 18: Kernformteil
- 19: Kavität
- 20: Eckformteil

- 21: Formfläche
- 22: Höhe
- 23: Gehrungsfläche
- 24: Gehrungsfläche
- 25: Seitenfläche

- 26: Seitenfläche
- 27: Doppelpfeil
- 28: Spannfläche
- 29: Ebene
- 30: Stellantrieb

- 31:
- 32: Aufspannplatte
- 33: Stellmittel
- 34: Druckzylinder
- 35: Kolbenstange

- 36: Stellkeil
- 37: Linearführungsanordnung
- 38: Führungselement
- 39: Doppelpfeil
- 40: Führungsanordnung

- 41: T-Nutführung
- 42: Mitnehmerelement
- 43: Zylinderstift
- 44: Langloch
- 45: Führungsmittel

- 46: Bohrung
- 47: Bohrung
- 48: Anlagefläche
- 49: Gesamtlänge
- 50: Innenhöhe

- 51: Distanz
- 52: Pfeil
- 53: Abstand
- 54: Führungssäule
- 55: Bohrung

- 56: Lagerbüchse
- 57: Bohrung
- 58: Winkel
- 59: Stirnfläche
- 60: Pfeil

- 61: Dicke
- 62: Dicke
- 63: Stützanordnung
- 64: Stützfläche
- 65: Stützfläche

- 66: Pfeil
- 67: Außenfläche
- 68: Außenfläche
- 69: Anlagefläche
- 70: Anlagefläche

## Patentansprüche

1. Spritzgießwerkzeug (1) zur Herstellung eines Transportkastens (6), insbesondere eines Flaschenkastens (7), aus einer Grundschale (12) aus einem ersten Kunststoff und einer zumindest bereichsweise durch Anspritzen damit verbundenen Hüllschicht (15) aus einem zweiten Kunststoff, mit einem in einem Formunterteil (2) angeordneten Kernformteil (18) und mit einem einen Bodenformteil (16) ausbildenden Formoberteil (3), mit im Formoberteil (3) und relativ zu einer Aufspannplatte (32) über Antriebsmittel verstellbaren Wandformteilen (17) und Eckformteilen (20), **dadurch gekennzeichnet, dass** die Eckformteile (20) über Mitnehmerelemente (42) mit zumindest jeweils einem angrenzenden Wandformteil (17) für eine gemeinsame Verstellung mit diesem in zu einer durch eine dem Formunterteil (2) zugewandten Spannfläche (28) des Formoberteils (3) gebildeten Ebene (29) senkrecht verlaufenden Richtung antriebsverbunden und über Führungsmittel (45) am Mitnehmerelement (42) relativ zu diesem in einer zu der Ebene (29) parallelen Richtung verstellbar gelagert sind.

2. Spritzgießwerkzeug (1) nach Anspruch 1, **dadurch gekennzeichnet, dass** im Eckformteil (20) ein parallel zu der Ebene (29) erstreckendes, mit dem Mitnehmerelement (42) eine Führungsanordnung ausbildendes Führungsmittel (45), z.B. ein Langloch (44), angeordnet ist.

3. Spritzgießwerkzeug (1) nach Anspruch 1 oder 2, **dadurch gekennzeichnet, dass** ein Stellantrieb (30) für den Eckformteil (20) durch ein im Formoberteil (3) angeordnetes Stellmittel (33), insbesondere ein Druckzylinder (34), der mit längs einer Linearführungsanordnung (37) eines senkrecht zu der Ebene (29) erstreckend am Formoberteil (3) befestigten Führungselement (38) verstellbar gelagerten Stellkeil (36) antriebsverbunden ist.

4. Spritzgießwerkzeug (1) nach einem der vorhergehenden Ansprüche, **dadurch gekennzeichnet, dass** der Eckformteil (20) am Stellkeil (36) in einer zu der Ebene (29) geneigt verlaufenden Führungsanordnung (40), insbesondere einer T- Nutenführung (41), verstellbar geführt ist.

5. Spritzgießwerkzeug (1) nach einem der vorhergehenden Ansprüche, **dadurch gekennzeichnet, dass** der Stellkeil (36) mittels des Stellantriebes (30) zwischen einer ersten Endposition gegen die Spannfläche (28) des Formoberteils (3) und einer zweiten Endposition gegen eine Anlagefläche (48) des Formunterteils (2) verstellbar ist.

6. Spritzgießwerkzeug (1) nach einem der vorhergehenden Ansprüche, **dadurch gekennzeichnet, dass** eine Gesamtlänge (49) des Stellkeils (36) kleiner ist als eine Innenhöhe (50) zwischen der Spannfläche (28) und der Anlagefläche (48) in Schließstellung des Spritzgießwerkzeuges (1).

7. Spritzgießwerkzeug (1) nach einem der vorhergehenden Ansprüche, **dadurch gekennzeichnet, dass** das Mitnehmerelement (42) durch einen in Bohrungen (46, 47) in einander gegenüber liegenden, mit Innenwandflächen der Wandformteile (17) einen Winkel von 45° einnehmenden Gehrungsflächen (23, 24) der den Eckformteil (20) benachbarten Wandformteilen (17) angeordneten Zylinderstift (43) gebildet ist.

8. Spritzgießwerkzeug (1) nach einem der vorhergehenden Ansprüche, **dadurch gekennzeichnet, dass** eine Längsmittelachse des Zylinderstiftes (43) zu den Gehrungsflächen (23, 24) rechtwinkelig ausgerichtet verläuft.

9. Spritzgießwerkzeug (1) nach einem der vorhergehenden Ansprüche, **dadurch gekennzeichnet, dass** der Zylinderstift (43) mit einem Ende in der Bohrung (47) eines Wandformteils (17) durch einen Presssitz befestigt ist und in der Bohrung (46) des weiteren Wandformteils (17) verschiebbar aufgenommen ist.

10. Spritzgießwerkzeug (1) nach Anspruch 1 oder 2, **dadurch gekennzeichnet, dass** der Zylinderstift (43) den Eckformteil (20) in dem mit einer Längsachse parallel zu der Ebene (29) erstreckenden Langloch (44) durchragt.

11. Spritzgießwerkzeug (1) nach einem der vorhergehenden Ansprüche, **dadurch gekennzeichnet, dass** die T- Nutenführung (49) mit der Ebene (29) einen dem Formkern (18) zugewandten Winkel von etwa 100° einschließt.

12. Spritzgießwerkzeug (1) nach einem der vorhergehenden Ansprüche, **dadurch gekennzeichnet, dass** ein Querschnitt des Eckformteils (20) T- förmig ausgebildet ist und eine Dicke (61) an der Formfläche (21) geringer ist als eine dem Stellkeil (36) zugewandte Dicke (62).

13. Spritzgießwerkzeug (1) nach einem der vorhergehenden Ansprüche, **dadurch gekennzeichnet, dass** der Querschnittsausbildung des Eckformteils (20) angepasst die Gehrungsflächen (23, 24) der Wandformteile (17) ausgebildet sind.

14. Spritzgießwerkzeug (1) nach einem der vorhergehenden Ansprüche, **dadurch gekennzeichnet, dass** durch die T- Form des Eckformteils (20) und den angepassten Gehrungsflächen (23, 24) eine über die Länge des Eckformteils (20) erstreckende Anschlaganordnung zur Begrenzung des Verstellweges des Eckformteils (20) in Richtung des Kernformteils (18) ausgebildet ist.

15. Spritzgießwerkzeug (1) nach einem der vorhergehenden Ansprüche, **dadurch gekennzeichnet, dass** die Wandformteile (17) über geneigt verlaufende, in der Aufspannplatte (32) des Formoberteils (3) angeordnete, Führungssäulen (54) relativ zu dieser, bzw. einer dem Formunterteil (2) zugewandten Spannfläche (28) der Aufspannplatte (32) verstellbar gelagert sind.

16. Spritzgießwerkzeug (1) nach einem der vorhergehenden Ansprüche, **dadurch gekennzeichnet, dass** ein Winkel (57) zwischen der Spannfläche (28) und Längsmittelachsen der Führungssäulen (54) zwischen 60° und 70°, bevorzugt 62° beträgt.

17. Spritzgießwerkzeug (1) nach einem der vorhergehenden Ansprüche, **dadurch gekennzeichnet, dass** je Wandformteil (17) zumindest zwei der Führungssäulen (54) in der Aufspannplatte (32) angeordnet sind.

18. Spritzgießwerkzeug (1) nach einem der vorhergehenden Ansprüche, **dadurch gekennzeichnet, dass** die Führungssäulen (54) in einer Bohrung (55) der Aufspannplatte (32) über eine Presssitzverbindung befestigt sind.

19. Spritzgießwerkzeug (1) nach einem der vorhergehenden Ansprüche, **dadurch gekennzeichnet, dass** die Wandformteile (17) über Lagerhülsen (56) an den Führungssäulen (54) verstellbar gelagert sind.

20. Spritzgießwerkzeug (1) nach einem der vorhergehenden Ansprüche, **dadurch gekennzeichnet, dass** die Wandformteile (17) über die Führungssäulen (54) umfassende Spiraldruckfedern auf Anlage mit Stirnflächen (59) an der Spannfläche (28) gehaltert sind.

21. Spritzgießwerkzeug (1) nach einem der vorhergehenden Ansprüche, **dadurch gekennzeichnet, dass** die Wandformteile (17) über mit einem Druckmedium beaufschlagter Stellzylinder längs den Führungssäulen (54) entgegen der Federkraft der Spiraldruckfedern relativ zu der Aufspannplatte (32) verstellbar sind.

22. Spritzgießwerkzeug (1) nach einem der vorhergehenden Ansprüche, **dadurch gekennzeichnet, dass** dem Stellkeil (36) eine Stützanordnung (63) zugeordnet ist.

23. Spritzgießwerkzeug (1) nach einem der vorhergehenden Ansprüchen, **dadurch gekennzeichnet, dass** die Stützanordnung (63) durch an den Gehrungsflächen (23,24) der Wandformteilen (17) parallel zu Außenflächen (67, 68) der Wandformteile (17) ausgerichtete Stützflächen (64,65) angeordnet sind.

24. Spritzgießwerkzeug (1) nach einem der vorhergehenden Ansprüche, **dadurch gekennzeichnet, dass** am Stellkeil (36) mit den Stützflächen (64, 65) zusammenwirkende Anlageflächen (67,68) angeordnet sind.

25. Spritzgießwerkzeug (1) nach einem der vorhergehenden Ansprüche, **dadurch gekennzeichnet, dass** durch die Anlageflächen (67, 68) gebildete Ebenen zueinander rechtwinkelig verlaufen und zu den die Gehrungsflächen (23, 24) aufnehmenden Ebenen in einem Winkel von 45° angeordnet sind.

## Claims

1. Injection mould (1) for producing a transport crate (6), in particular a bottle crate (7), comprising a main shell (12) made from a first plastic and an encasing layer (15) made from a second plastic joined to at least certain regions thereof by an injection process, with a core mould part (18) disposed in a mould bottom part (2) and a mould top part (3) forming a base mould part (16),with wall mould parts (17) and corner mould parts (20) in the top mould part (3) which can be displaced by driving means relative to a clamping plate (32), **characterised in that** the corner mould parts (20) are mounted so that they are connected by driver elements (42) to at least one adjacent wall mould part (17) in a driving arrangement respectively to permit a joint displacement with the latter in a direction extending perpendicular to a plane (29) formed by a clamping surface (28) of the mould top part (3) facing the mould bottom part (2) and are displaceable relative to the latter in a direction parallel with the plane (29) by means of guide means (45) on the driver element (42).

2. Injection mould (1) as claimed in claim 1, **characterised in that** a guide means (45), e.g. a slot (44), forming a guide arrangement in conjunction with the driver element (42) is provided in the corner mould part (20) extending parallel with the plane (29).

3. Injection mould (1) as claimed in claim 1 or 2, **characterised in that** an actuator drive (30) is provided for the corner mould part (20) in the form of an actuator means (33) disposed in the mould top part (3), in particular a pressure cylinder (34), which is drivingly connected to a positioning key (36) mounted so as to be displaceable along a linear guide arrangement (37) of a guide element (38) secured to the mould top part (3) extending perpendicular to the plane (29).

4. Injection mould (1) as claimed in one of the preceding claims, **characterised in that** the corner mould part (20) is guided on the positioning key (36) in a guide arrangement (40) extending at an angle to the plane (29), in particular a T-shaped keyway (41).

5. Injection mould (1) as claimed in one of the preceding claims, **characterised in that** the positioning key (36) can be displaced by means of the actuator drive (30) between a first end position against the clamping surface (28) of the mould top part (3) and a second end position against a contact surface (48) of the mould bottom part (2).

6. Injection mould (1) as claimed in one of the preceding claims, **characterised in that** a total length (49) of the positioning key (36) is shorter than an internal height (50) between the clamping surface (28) and the contact surface (48) when the injection mould (1) is in the closed position.

7. Injection mould (1) as claimed in one of the preceding claims, **characterised in that** the driver element (42) is provided in the form of a cylindrical pin (43) disposed in bores (46, 47) in oppositely lying mitre surfaces (23, 24) of the wall parts (17) adjacent to the corner mould part (20) assuming an angle of 45° with respect to internal wall surfaces of the wall mould parts (17).

8. Injection mould (1) as claimed in one of the preceding claims, **characterised in that** a longitudinal mid-axis of the cylindrical pin (43) extends at a right angle to the mitre surfaces (23, 24).

9. Injection mould (1) as claimed in one of the preceding claims, **characterised in that** the cylindrical pin (43) is secured in the bore (47) of a wall mould part (17) in a force-fit by one end and is accommodated in the bore of the other wall mould part (27) so that it can be displaced.

10. Injection mould (1) as claimed in claim 1 or 2, **characterised in that** the cylindrical pin (43) extends through the corner mould part (20) in the slot (44) with a longitudinal axis extending parallel with the plane (29).

11. Injection mould (1) as claimed in one of the preceding claims, **characterised in that** the T-shaped keyway (49) subtends an angle of approximately 100° facing the mould core (18) with the plane (29).

12. Injection mould (1) as claimed in one of the preceding claims, **characterised in that** a cross-section of the corner mould part (20) is T-shaped and a thickness (61) on the mould surface (31) is slimmer than a thickness (62) facing the positioning key (36).

13. Injection mould (1) as claimed in one of the preceding claims, **characterised in that** the cross-sectional design of the corner mould part (20) is adapted to the mitre surfaces (23, 24) of the wall mould parts (17).

14. Injection mould (1) as claimed in one of the preceding claims, **characterised in that** the T-shape of the corner mould part (20) and the adapted mitre surfaces (23, 24) form a stop arrangement extending across the length of the corner mould part (20) to restrict the displacement path of the corner mould part (20) in the direction of the core mould part (18).

15. Injection mould (1) as claimed in one of the preceding claims, **characterised in that** the wall mould parts (17) are mounted so that they can be displaced by means of obliquely extending guide posts (54) disposed in the clamping plate (32) of the mould top part (3) relative to the latter or a clamping surface (28) of the clamping plate (32) facing the mould bottom part (2).

16. Injection mould (1) as claimed in one of the preceding claims, **characterised in that** an angle (57) between the clamping surface (28) and longitudinal mid-axes of the guide posts (54) is between 60° and 70°, preferably 62°.

17. Injection mould (1) as claimed in one of the preceding claims, **characterised in that** at least two of the guide posts (54) are provided in the clamping plate (32) for each wall mould part (17).

18. Injection mould (1) as claimed in one of the preceding claims, **characterised in that** the guide posts (54) are secured in a bore (55) of the clamping plate (32) by a force-fit connection.

19. Injection mould (1) as claimed in one of the preceding claims, **characterised in that** the wall mould parts (17) are mounted by means of bearing bushes (56) so that they can be displaced on the guide posts (54).

20. Injection mould (1) as claimed in one of the preceding claims, **characterised in that** the mould wall parts (17) are held with end faces (59) in abutment with the clamping surface (28) by means of helical compression springs extending around the guide posts (54).

21. Injection mould (1) as claimed in one of the preceding claims, **characterised in that** the wall mould parts (17) can be displaced along the guide posts (54) against the spring force of the helical compression springs relative to the clamping plate (32) by means of an actuator cylinder to which pressurising medium is applied.

22. Injection mould (1) as claimed in one of the preceding claims, **characterised in that** a support arrangement (63) co-operates with the positioning key (36).

23. Injection mould (1) as claimed in one of the preceding claims, **characterised in that** the support arrangement (63) is provided in the form of support surfaces (64, 65) on the mitre surfaces (23, 24) of the wall mould parts (17) oriented parallel with external faces (67, 68) of the wall mould parts (17).

24. Injection mould (1) as claimed in one of the preceding claims, **characterised in that** contact surfaces (67, 68) co-operating with the support surfaces (64, 65) are provided on the positioning key (36).

25. Injection mould (1) as claimed in one of the preceding claims, **characterised in that** planes formed by the contact surfaces (67, 68) extend at a right angle to one another and at an angle of 45° with respect to the planes receiving the mitre surfaces (23, 24).

## Revendications

1. Moule pour moulage par injection (1) pour la réalisation d'une caisse de transport (6), en particulier une caisse de bouteilles (7), formée par une coque de base (12) dans une première matière plastique et une couche d'habillage (15) dans une deuxième matière plastique, reliée au moins par zones par injection sur ladite coque de base, comportant une partie à mouler le noyau (18), disposée dans une partie inférieure (2) du moule, et comportant une partie supérieure (3) du moule formant une partie à mouler le fond (16), comportant des parties à mouler les parois (17) et des parties à mouler les coins (20), aptes à être déplacées par des moyens d'entraînement dans la partie supérieure (3) du moule et par rapport à une plaque de fixation (32), **caractérisé en ce que** les parties à mouler les coins (20) sont montées de manière à être liées en entraînement, par l'intermédiaire d'éléments entraîneurs (42), avec respectivement au moins une partie à mouler les parois (17) adjacente pour un déplacement conjoint avec celle-ci dans une direction perpendiculaire à un plan (29), formé par une surface de serrage (28), orientée vers la partie inférieure du moule (2), de la partie supérieure du moule (3) et de manière réglable, par des moyens de guidage (45), sur l'élément entraîneur (42) par rapport à celui-ci dans une direction parallèle au plan (29).

2. Moule pour moulage par injection (1) selon la revendication 1, **caractérisé en ce que** dans la partie à mouler les coins (20) est agencé un moyen de guidage (45), tel qu'un trou oblong (44), qui s'étend parallèlement au plan (29) et forme avec l'élément entraîneur (42) un ensemble de guidage.

3. Moule pour moulage par injection (1) selon la revendication 1 ou 2, **caractérisé en ce qu'**un servomoteur (30) pour la partie à mouler les coins (20) est lié en entraînement par l'intermédiaire d'un moyen de réglage (33), en particulier un cylindre de pression (34), qui est agencé dans la partie supérieure (3) du moule et qui est lié en entraînement avec une clavette de réglage (36) montée mobile le long d'un système de guidage linéaire (37) d'un élément de guidage (38) fixée à la partie supérieure (3) du moule en s'étendant perpendiculairement au plan (29).

4. Moule pour moulage par injection (1) selon l'une quelconque des revendications précédentes, **caractérisé en ce que** la partie à mouler les coins (20) est logée de manière mobile sur la clavette de réglage (36) dans un système de guidage (40), en particulier un guidage à rainure en T (41), qui est incliné par rapport au plan (29).

5. Moule pour moulage par injection (1) selon l'une quelconque des revendications précédentes, **caractérisé en ce que** la clavette de réglage (36) peut être déplacée au moyen du servomoteur (30) entre une première position finale contre la surface de serrage (28) de la partie supérieure (3) du moule et une deuxième position finale contre une surface d'appui (48) de la partie inférieure (2) du moule.

6. Moule pour moulage par injection (1) selon l'une quelconque des revendications précédentes, **caractérisé en ce qu'**une longueur totale (49) de la clavette de réglage (36) est inférieure à une hauteur intérieure (50) entre la surface de serrage (28) et la surface d'appui (48) dans la position de fermeture du moule pour moulage par injection (1).

7. Moule pour moulage par injection (1) selon l'une quelconque des revendications précédentes, **caractérisé en ce que** l'élément entraîneur (42) est formé par un tenon cylindrique (43), agencé dans des forures (46, 47) ménagées dans des surfaces à onglet (23, 24) face à face des parties à mouler les parois (17), adjacentes à la partie à mouler les coins (20), lesquelles surfaces à onglet forment un angle de 45° avec les parois intérieures des parties à mouler les parois (17).

8. Moule pour moulage par injection (1) selon l'une quelconque des revendications précédentes, **caractérisé en ce qu'**un axe médian longitudinal du tenon cylindrique (43) est orienté à angle droit par rapport aux surfaces à onglet (23, 24).

9. Moule pour moulage par injection (1) selon l'une quelconque des revendications précédentes, **caractérisé en ce que** le tenon cylindrique (43) est fixé avec une extrémité par un ajustement serré dans la forure (47) de l'une des parties à mouler les parois (17) et est logé mobile dans la forure (46) de l'autre partie à mouler les parois (17).

10. Moule pour moulage par injection (1) selon la revendication 1 ou 2, **caractérisé en ce que** le tenon cylindrique (43) traverse la partie à mouler les coins (20) dans le trou oblong (44) qui s'étend avec un axe longitudinal parallèlement au plan (29).

11. Moule pour moulage par injection (1) selon l'une quelconque des revendications précédentes, **caractérisé en ce que** le guidage à rainure en T (49) forme avec le plan (29) un angle de 100° environ orienté vers le noyau de moulage (18).

12. Moule pour moulage par injection (1) selon l'une quelconque des revendications précédentes, **caractérisé en ce qu'**une section de la partie à mouler les coins (20) est réalisée en forme de T, et une épaisseur (61) au niveau de la surface de formage (21) est inférieure à une épaisseur (62) orientée vers la clavette de réglage (36).

13. Moule pour moulage par injection (1) selon l'une quelconque des revendications précédentes, **caractérisé en ce que** la réalisation de la section de la partie à mouler les coins (20) est ajustée aux surfaces à onglet (23, 24) des parties à mouler les parois (17).

14. Moule pour moulage par injection (1) selon l'une quelconque des revendications précédentes, **caractérisé en ce que**, par la forme en T de la partie à mouler les coins (20) et par les surfaces à onglet (23, 24) ajustées, il est réalisé un système de butée qui s'étend sur la longueur de la partie à mouler les coins (20) et est destiné à délimiter la trajectoire de déplacement de la partie à mouler les coins (20) dans la direction de la partie à mouler le noyau (18).

15. Moule pour moulage par injection (1) selon l'une quelconque des revendications précédentes, **caractérisé en ce que**, par l'intermédiaire de colonnes de guidage (54) qui sont inclinées et sont agencées dans la plaque de fixation (32) de la partie supérieure (3) du moule, les parties à mouler les parois (17) sont montées de manière mobile par rapport auxdites colonnes de guidage ou par rapport à une surface de serrage (28), orientée vers la partie inférieure (2) du moule, de la plaque de fixation (32).

16. Moule pour moulage par injection (1) selon l'une quelconque des revendications précédentes, **caractérisé en ce qu'**un angle (57) formé entre la surface de serrage (28) et des axes médians longitudinaux des colonnes de guidage (54) mesure entre 60° et 70°, de préférence 62°.

17. Moule pour moulage par injection (1) selon l'une quelconque des revendications précédentes, **caractérisé en ce que** pour chaque partie à mouler les parois (17) au moins deux des colonnes de guidage (54) sont agencées dans la plaque de fixation (32).

18. Moule pour moulage par injection (1) selon l'une quelconque des revendications précédentes, **caractérisé en ce que** les colonnes de guidage (54) sont fixées dans une forure (55) de la plaque de fixation (32) par l'intermédiaire d'un assemblage à ajustement serré.

19. Moule pour moulage par injection (1) selon l'une quelconque des revendications précédentes, **caractérisé en ce que** les parties à mouler les parois (17) sont montées de manière mobile sur les colonnes de guidage (54) par l'intermédiaire de manchons de montage (56).

20. Moule pour moulage par injection (1) selon l'une quelconque des revendications précédentes, **caractérisé en ce que** les parties à mouler les parois (17) sont maintenues en appui avec les faces frontales (59) contre la surface de serrage (28) par l'intermédiaire de ressorts de pression en spirale entourant les colonnes de guidage (54).

21. Moule pour moulage par injection (1) selon l'une quelconque des revendications précédentes, **caractérisé en ce que** les parties à mouler les parois (17) sont réglables par rapport à la plaque de fixation (32) le long des colonnes de guidage (54) à l'encontre de la force des ressorts de pression en spirale, par l'intermédiaire d'un vérin de réglage, sollicité par un milieu sous pression.

22. Moule pour moulage par injection (1) selon l'une quelconque des revendications précédentes, **caractérisé en ce qu'**un système de support (63) est associé à la clavette de réglage (36).

23. Moule pour moulage par injection (1) selon l'une quelconque des revendications précédentes, **caractérisé en ce que** le système de support (63) est formé par des surfaces de support (64, 65), sur les surfaces à onglet (23, 24) des parties à mouler les parois (17) et orientées parallèlement aux surfaces extérieures (67, 68) des parties à mouler les parois (17).

24. Moule pour moulage par injection (1) selon l'une quelconque des revendications précédentes, **caractérisé en ce que** des surfaces d'appui (67, 68), coopérant avec les surfaces de support (64, 65), sont agencées sur la clavette de réglage (36).

25. Moule pour moulage par injection (1) selon l'une quelconque des revendications précédentes, **caractérisé en ce que** des plans formés par les surfaces d'appui (67, 68) s'étendent à angle droit l'un par rapport à l'autre et sont disposés en formant un angle de 45° par rapport aux plans recevant les surfaces à onglet (23, 24).
